# EUROPÄISCHE PATENTANMELDUNG

(11) **EP 2 762 424 A1**
(43) Veröffentlichungstag der Anmeldung: **06.08.2014**
(21) Anmeldenummer: 14154021.1
(22) Anmeldetag: 05.02.2014
(51) Int. Cl.: B65G 17/12

(54) **Vorrichtung zum Höhentransport von Stapeln mit einem Mattenelement**

(30) Priorität: 05.02.2013 DE 102013101141
(71) Anmelder: Windmöller & Hölscher KG, 49525 Lengerich (DE)
(72) Erfinder: Hawighorst, Thomas, 49205 Hasbergen (DE); Tillmann, Guido, 48607 Ochtrup (DE); Dolák, Adolf, 796 01 Prostejov (CZ); Smid, Roman, 77900 Olomouc (CZ)
(74) Vertreter: Vogel, Andreas

(57) **Zusammenfassung**

Die Erfindung betrifft eine Vorrichtung zum Höhentransport von Stapeln (1), insbesondere Säcken, Sackhalbzeugen, Schlauchabschnitten oder flachliegenden Säcken, welche folgende Merkmale umfasst: eine Transportvorrichtung (20), die mehrere, umlaufende Riemenelemente (21,22,23,24) aufweist, an denen zumindest ein flexibles Mattenelement (40) angeordnet ist, eine Zuführebene (2), um Stapel (1) dem Mattenelement (40) zuzuführen, eine Abführebene (3), um Stapel (1) von dem Mattenelement (40) abzuführen, ein Antrieb (10), der eine Vielzahl an Getriebeelementen (11,12,13,14,15,16) aufweist, die in Wirkverbindung mit den Riemenelementen (21,22,23,24) stehen, um das Mattenelement (40) von der Zuführebene (2) in die Abführebene (3) und zurück zu bewegen, wobei die Getriebeelemente (11,12,13,14,15,16) derart angeordnet sind, dass sich eine Hubzone (4) und eine Transportzone (5) bilden, wobei die Hubzone (4) zwischen der Zuführebene (2) und der Abführebene (3) liegt, wobei in der Hubzone (4) das Mattenelement (40) eine Standfläche (48) für den Stapel (1) bietet, die im wesentlichen senkrecht () zur Bewegungsrichtung des Mattenelementes (40) ist, und in der Transportzone (5) die Standfläche (48) des Mattenelementes (40) parallel zur Bewegungsrichtung des Mattenelementes (40) ist und mindestens eine Umlenkung der Bewegungsrichtung des Mattenelementes (40) erfolgt, wobei das Mattenelement (40) aus einer Vielzahl an steifen Mattengliedern (43) ausgeführt ist, die derart benachbart zueinander angeordnet sind, dass bei der Umlenkung der Bewegungsrichtung des Mattenelementes (40) jedes Mattenglied (43) zum benachbarten Mattenglied (43) relativ bewegbar ist.

## Beschreibung

Die Erfindung betrifft eine Vorrichtung zum Höhentransport von Stapeln.

Höhenförderer sind aus dem Stand der Technik bekannt, die flachliegende Gegenstände, die übereinander gestapelt sind, von einer ersten Höhe in eine zweite Höhe über eine Transportvorrichtung befördern. Hierbei umfasst die bekannte Vorrichtung eine Zuführebene, in der die Stapel einem Mattenelement zugeführt werden. Dieses Mattenelement ist in der Regel flexibel ausgeführt und wird über eine Transportvorrichtung bewegt. Bekannte Transportvorrichtungen weisen beispielsweise umlaufende Riemenelemente auf, an denen das Mattenelement befestigt ist. Zudem ist aus dem Stand der Technik bekannt, die Riemenelemente über einen Antrieb zu bewegen. Hierbei steht der Antrieb mit den Riemenelementen in Wirkverbindung, um das Mattenelement von der Zuführebene in die Abführebene und zurück zu bewegen. Da die Herstellungsgeschwindigkeiten bei den Gegenständen, die in Stapeln vom Höhenförderer zu transportieren sind, in der Vergangenheit wesentlich sich erhöht haben, ist das Bestreben eine Leistungssteigerung beim Höhenförderer zu bewirken. Das bedeutet, dass die Geschwindigkeit des Transports von Stapeln in der Hubzone des Höhenförderers zu steigern ist. Nachteiligerweise hat sich gezeigt, dass bei höheren Transportgeschwindigkeiten die Stapel, die sich auf dem Mattenelement befinden, zum Ausschuppen neigen, das bedeutet, dass einige Elemente, Gegenstände des Stapels sich verschieben. Folglich weist der Stapel in der Abführebene nicht mehr seine Geometrie auf, die er in der Zuführebene hatte. Falls die zu transportierenden Stapel nach dem Höhenförderer noch zu palettieren sind und/oder zu verpacken sind, ergeben sich aufgrund der veränderten Stapelform weitere Probleme. Da einige Elemente des Stapels sich nicht mehr in der gewünschten Position befinden, kann somit die anschließende Palettierqualität und/oder Packqualität nach dem Höhenförderer leiden.

Aus dem Stand der Technik ist es bekannt, dass bei der Umlenkung der Mattenelemente innerhalb des Höhenförderers keine Verspannungen auftreten dürfen. Aus diesem Grund ist es üblich, das Mattenelement ausreichend lang auszuführen, welches wiederum zur Folge hat, dass die Länge des Mattenelementes in seiner waagerechten Position ein wenig zu lang ist. Das bedeutet, dass ein gewisses Spiel bezüglich der Länge des Mattenelementes mit einkalkuliert ist, um bei der Umlenkung des Mattenelementes keine Verspannung und/oder Zwangskräfte, die auf das Mattenelement wirken können, entstehen zu lassen.

Die Aufgabe der vorliegenden Erfindung ist es die oben genannten Nachteile zu vermeiden, insbesondere eine Vorrichtung zum Höhentransport von Stapeln bereitzustellen, die in ihrer Leistung zur Beförderung der Stapel erhöht ist, ohne dass der zu transportierende Stapel seine Grundform verliert.

Die Aufgabe der vorliegenden Erfindung wird durch sämtliche Merkmale des Patentanspruches 1 gelöst. In den abhängigen Patentansprüchen sind mögliche Ausführungsformen beschrieben.

Erfindungsgemäß wird eine Vorrichtung zum Höhentransport von Stapeln, insbesondere Säcken, Sackhalbzeugen, Schlauchabschnitten oder flachliegenden Säcken vorgeschlagen, wobei die erfindungsgemäße Vorrichtung eine Transportvorrichtung umfasst, die mehrere, umlaufende Riemenelemente aufweist, an denen zumindest ein flexibles Mattenelement angeordnet ist, eine Zuführebene, um Stapel dem Mattenelement zuzuführen, eine Abführebene, um Stapel von dem Mattenelement abzuführen. Ferner umfasst die erfindungsgemäße Vorrichtung einen Antrieb, der eine Vielzahl an Getriebeelementen aufweist, die in Wirkverbindung mit den Riemenelementen stehen, um das Mattenelement von der Zuführebene in die Abführebene und zurück zu bewegen, wobei die Getriebeelemente derart angeordnet sind, dass sich eine Hubzone und eine Transportzone bilden, wobei die Hubzone zwischen der Zuführebene und der Abführebene liegt, wobei in der Hubzone das Mattenelement eine Standfläche für den Stapel bietet, die im wesentlichen senkrecht zur Bewegungsrichtung des Mattenelementes ist, und in der Transportzone die Standfläche des Mattenelementes parallel zur Bewegungsrichtung des Mattenelementes ist und mindestens eine Umlenkung der Bewegungsrichtung des Mattenelementes erfolgt. Zudem umfasst die erfindungsgemäße Vorrichtung ein Mattenelement, dass aus einer Vielzahl an steifen Mattengliedern ausgeführt ist, die derart benachbart zueinander angeordnet sind, dass bei der Umlenkung der Bewegungsrichtung des Mattenelementes jedes Mattenglied zum benachbarten Mattenglied relativ bewegbar ist. Der wesentliche Kern der vorliegenden Erfindung ist, dass das Mattenelement aus einer Vielzahl an einzelnen Mattengliedern ausgebildet ist, die nebeneinander positioniert sind, wobei bei der Bewegung in der Hubzone die Mattenglieder waagerecht ausgerichtet sind und eine ebene Standfläche für jeden einzelnen Stapel bilden. Da die Mattenglieder materialsteif sind, ist eine Durchbiegung des Mattenelementes ausgeschlossen. In den Umlenkungsbereichen bewegen sich die einzelnen Mattenglieder individuell um die jeweiligen Getriebeelemente, wobei der Abstand zu dem jeweiligen benachbarten Mattenglied im Umlenkbereich sich ändert, bzw. sich ändern kann. Außerhalb der Umlenkbereiche weisen die einzelnen Mattenglieder zueinander einen fest definierten Abstand auf. Somit sind auch höhere Transportgeschwindigkeiten in der Transportzone und in der Hubzone denkbar, so dass ein Ausschuppen der Stapel verhinderbar ist. Innerhalb der Hubzone verbleibt das Mattenelement in der waagerechten Position, ohne dass die Gefahr besteht, dass einzelne Elemente des Stapels sich verschieben oder sogar herunter fallen. Somit liegt in der Hubzone eine planare Standfläche für den einzelnen Stapel vor, die nicht mehr wellig oder ballig sich während der Bewegung ausformen kann, welches im Stand der Technik denkbar ist. Somit lässt sich eine Paket- und/oder Palettierqualität, die sich nach dem Höhentransport bzw. die sich nach der erfindungsgemäßen Vorrichtung anschließt wesentlich erhöhen. Beispielsweise erfolgt nach der erfindungsgemäßen Vorrichtung in einer Palettiervorrichtung die Zusammenführung der einzelnen Stapel auf eine Palette, die wiederum als Einheit verpackt wird. Ein weiterer Vorteil bezüglich des Einsatzes von Mattengliedern, die zueinander beabstandet sind, ist, dass während der Bewegung des Mattenelementes dieser geringer dazu neigt, in Schwingungen versetzt zu werden, welches beispielsweise während des Transportes der Stapel entstehen kann.

Vorteilhafterweise können die Mattenglieder derart im Mattenelement angeordnet sein, dass in der Hubzone die Mattenglieder einen Abstand zueinander aufweisen. Ein Vorteil dieser Ausführungsform ist, dass während der Bewegung des Mattenelementes der Abstand dazu beiträgt, dass nahezu keine Geräusche zwischen den Mattengliedern entstehen. Der Abstand zwischen den Mattengliedern sorgt zudem dafür, dass bei der Umlenkung der Bewegungsrichtung des Mattenelementes jedes Mattenglied entsprechend sich bewegen kann, um der Bewegungsrichtung des Mattenelementes zu folgen. Vorteilhafterweise liegt der Abstand zwischen 0,3mm ≤ Abstand ≤ 5mm, insbesondere zwischen 1 mm ≤ Abstand ≤ 3mm. Vorzugsweise ist der Abstand zwischen zwei Mattengliedern ungefähr 2mm. Der Abstand hängt unter anderem davon ab, wie stark die verwendeten Getriebeelemente im erfindungsgemäßen Höhenförderer einen Richtungswechsel einleiten. Des Weiteren hängt der Abstand zwischen den Mattengliedern auch vom Gegenstand ab, der in Form von Stapeln zu transportieren ist. Hierbei sollte der Abstand nicht zu groß gewählt werden, welches die Standqualität des Stapels auf der Standfläche auch negativ beeinflussen könnte.

Vorteilhafterweise kann das Mattenelement aus Metall ausgebildet sein, insbesondere aus Aluminium ausgeführt sein. Hierdurch kann ein gewichtsarmes Mattenelement bereitgestellt werden, welches dem gesamten Höhenförderer inklusive aller Mattenelemente weniger zu Schwingungen anregt.

Zudem kann die erfindungsgemäße Vorrichtung derart ausgeführt sein, dass das Mattenglied ein Hohlprofil aufweist, wobei insbesondere ausgehend von der Standfläche eines Mattengliedes zum benachbarten Mattenglied jeweils eine Seitenwandung sich anschließt, wobei die Seitenwandungen zueinander im wesentlichen parallel angeordnet sind. Das Hohlprofil trägt unter anderem dazu bei, dass ein geringes Gesamtgewicht des Mattenelementes erzielt wird. Zudem trägt das Hohlprofil dazu bei, dass jedes Mattenglied eine genügend große Steifigkeit aufweist, welches sich positiv für den waagerechten Transport der Stapel, insbesondere in der Hubzone auswirkt.

Vorteilhafterweise ist das Mattenglied ein Biegeteil, insbesondere ein Stanzbiegeteil. Somit lässt sich jedes einzelne Mattenglied kostengünstig herstellen. Vorteilhafterweise kann die Seitenwandung im Wesentlichen senkrecht zur Standfläche des Mattengliedes ausgerichtet sein. In einer möglichen Ausführungsform der Erfindung ist das Mattenglied als U-Profil ausgebildet.

Zudem kann vorgesehen sein, dass zwischen der Seitenwandung und der Standfläche das Mattenglied eine Abrundung aufweist. Ein Vorteil der Abrundung ist, dass bei der Zuführung der Stapel und/oder bei der Abführung der Stapel keine Funktionsstörungen auftreten, das bedeutet, dass zum Beispiel einzelne Stapel nicht zwischen den einzelnen Mattengliedern hängen bleiben können, bzw. gegen die Mattenglieder stoßen können, wodurch die gewünschte Bewegung des Stapels gestört wird.

In einer weiteren die Erfindung verbessernden Maßnahme kann während der Umlenkung der Abstand zwischen zwei benachbarten Mattengliedern im Bereich der Abrundung sich vergrößern. Jedes einzelne Mattenglied kann individuell relativ zum benachbarten Glied bewegt und/oder verschwenkt werden.

Die Erfindung kann weiterhin vorsehen, dass das Mattenelement mindestens ein Stabilisierungsmittel aufweist, das in der Hubzone eine horizontale Erstreckung der Standfläche begünstigt, insbesondere dass der Seitenbereich des Mattengliedes das Stabilisierungsmittel aufweist. Das bedeutet, dass das Stabilisierungsmittel die waagerechte Auswirkung des Mattenelementes in der Hubzone aufrechterhält, ohne dass die Gefahr besteht, dass eine Durchbiegung des Mattenelementes entsteht, welches beispielsweise durch das Eigengewicht des Mattenelementes und/oder durch den zu transportierenden Stapel verursacht werden kann.

Zudem ist es denkbar, dass das Mattenelement Mittel zur Begünstigung der Biegefähigkeit des Mattenelementes aufweist, wobei insbesondere das Mittel an der der Standfläche abgewandten Seite des Mattenelementes angeordnet ist und/oder dass der Seitenbereich des Mattengliedes das Mittel zur Begünstigung der Biegefähigkeit des Mattenelementes aufweist. Befindet sich das Mittel zur Begünstigung der Biegefähigkeit des Mattenelementes am Seitenbereich kann es vorteilhaft sein, dass dieses im Folgenden auch Biegemittel genannte Mittel sich an der der Standfläche abgewandten Seite des Mattenelementes befindet. Dieses Biegemittel kann aus einem flexiblen Kunststoff ausgeführt sein. Vorteilhafterweise ist dieses Biegemittel an den Mattengliedern befestigt. Somit bildet das Biegemittel sowie die Mattenglieder eine gemeinsame Einheit.

Zudem kann es vorteilhaft sein, dass das Mittel zur Begünstigung der Biegefähigkeit des Mattenelementes eine Rippenstruktur aufweist, wobei die Rippenstruktur vorsprungartige Rippen aufweist, die quer zur Bewegungsrichtung des Mattenelementes ausgerichtet sind. Das bedeutet, dass die Rippenstruktur im Umlenkbereich des Höhenförderers ein zuverlässig funktionierendes Umlenken des Mattenelementes sowie der einzelnen Mattenglieder unterstützt.

Des Weiteren kann die erfindungsgemäße Vorrichtung den Vorteil bieten, dass das Mattenelement zwei Seitenbereiche aufweist, die parallel zur Bewegungsrichtung des Mattenelementes zueinander ausgerichtet sind, wobei insbesondere an den Seitenbereichen die Riemenelemente befestigt sind. Somit lässt sich eine zuverlässig wirkende Befestigung zwischen dem Riemenelement und dem Mattenelement erzielen. Gleichzeitig wird die Standfläche, auf der der Stapel angeordnet ist, nicht durch die Befestigung des Riemenelementes am Mattenelement beeinflusst. Vorteilhafterweise umfasst ein Seitenbereich zwei Befestigungspunkte, an denen jeweils ein Riemenelement fixiert ist.

Vorteilhafterweise können die Stabilisierungsmittel an den Seitenbereichen des Mattenelementes angeordnet sein, so dass einer Durchbiegung des Mattenelementes in der Hubzone entgegengewirkt wird. Hierbei kann es von Vorteil sein, dass das Stabilisierungsmittel der Form des Hohlprofils angepasst ist. Zum Beispiel ist es erfindungsgemäß denkbar, dass das Stabilisierungsmittel quaderförmig oder würfelförmig ausgeführt ist. Vorteilhafterweise erstreckt sich das Stabilisierungsmittel lediglich im Seitenbereich des Mattenelementes und nicht komplett durch das gesamte Hohlprofil einschließlich bis zur gegenüberliegenden Seite des gleichen Mattengliedes. Das bedeutet, dass jedes Mattenglied an seinen beiden Seitenbereichen, die gegenüber liegen, ein Stabilisierungsmittel aufweisen.

Weiterhin kann vorteilhaft das Stabilisierungsmittel über mindestens ein Befestigungsmittel am Mattenglied und/oder am Biegemittel befestigt sein, wobei insbesondere über das Befestigungsmittel die Steifigkeit des Mattenelementes einstellbar ist. Somit kann das Befestigungsmittel zwei Funktionen aufweisen. In Abhängigkeit vom Gewicht des Stapels oder anderer wichtiger Einflussfaktoren ermöglicht die erfindungsgemäße Vorrichtung, dass über das Befestigungsmittel die Steifigkeit individuell eingestellt werden kann. Zudem kann es vorgesehen sein, dass über das Befestigungsmittel zusätzlich die Biegefähigkeit des Mantelelementes beeinflusst werden kann. Das Befestigungsmittel kann zum Beispiel eine Schraube sein, wobei über ein definiertes Drehmoment, das über die Schraube in das Mattenelement eingebracht wird, um primär das Stabilisierungsmittel mit dem Mattenglied und/oder dem Biegemittel zu verbinden, die Biegefähigkeit des Mattenelementes und/oder die Steifigkeit des Mattenelementes individuell einzustellen, und zwar nach den entsprechenden Anforderungen für den Transport der in Rede stehenden Stapel.

Zudem umfasst die Erfindung, dass eine der Seitenwandungen des Mattengliedes eine Aussparung aufweist, durch die das Stabilisierungsmittel sich erstreckt und am benachbarten Mattenglied anliegt. Das Stabilisierungsmittel ist vorteilhafterweise aus einem anderen Material gefertigt, als das Mattenglied. Vorteilhafterweise ist das Stabilisierungsmittel aus einem Kunststoffmaterial hergestellt. Somit wird verhindert, dass während der Umlenkung und der Bewegung der einzelnen Mattenglieder zueinander Geräusche entstehen, da lediglich es zu einer Kontaktierung eines Seitenbereiches eines Mattenelementes mit dem aus Kunststoff ausgeführten Stabilisierungsmittel kommt. Das Stabilisierungsmittel liegt flächig an der Seitenwandung des benachbarten Mattengliedes an, wodurch sich die beiden berührenden Elemente gegeneinander abstützen und somit ein Durchbiegen des Mattenelementes wirksam verhindert wird. Die Aussparung kann beispielsweise als Öffnung an der Seitenwandung ausgebildet sein, so dass zumindest bereichsweise das Stabilisierungsmittel durch diese Aussparung hindurchragt und die benachbarte Seitenwandung kontaktiert. Ein weiterer Vorteil ist, dass die Herstellungstoleranzen der einzelnen Mattenglieder größer sind als die der Stabilisierungsmittel, so dass es vorteilhaft sein kann, die Kontaktierung des Mattengliedes mit dem benachbart angeordneten Stabilisierungsmittel zu realisieren.

Die Erfindung kann zudem derart weiterentwickelt sein, dass zwischen den Rippen mehrere Freiräume sich befinden, wobei in dem Freiraum, der mittig zum zugehörigen Mattenglied positioniert ist, das Befestigungsmittel wirkt, insbesondere dass in diesem Freiraum ein Lagerelement eingelegt ist, das mit dem Befestigungsmittel, das durch das Mattenglied und durch das Stabilisierungsmittel ragt, verbunden ist. Das bedeutet, dass das Lagerelement in die Rippenstruktur des Biegemittels eintaucht und somit kein Hindernis innerhalb der Transportvorrichtung bzw. innerhalb des Höhenförderers darstellt.

Vorteilhafterweise kann das Mattenelement an beiden Seitenbereichen über Befestigungselemente mit den Riemenelementen verbunden sein, insbesondere kann das Befestigungselement das Stabilisierungsmittel eines Mattengliedes mit dem dazugehörigen Riemenelement verbinden. Das Befestigungselement kann zum Beispiel stiftartig ausgebildet sein, welches sich von einer definierten Stelle des Riemens bis zum Stabilisierungsmittel, welches im Mattenglied aufgenommen ist, erstreckt. Auch ist es denkbar, dass das Befestigungselement sich in seiner Erstreckung verändern lässt, bzw. seine Länge verändern kann, so dass individuell ein Befestigungselement für unterschiedliche Anordnungen der Riemenelemente benachbart zum Mattenelement einsetzbar ist.

Die Erfindung umfasst ebenfalls die Möglichkeit, dass eine definierte Zugbelastung auf das Mittel zur Begünstigung der Biegefähigkeit des Mattenelementes wirkt. Das Biegemittel kann somit mit einer definierten Zugbelastung versehen sein, die an unterschiedlichen Orten des Höhenförderers einleitbar ist. Die Zugbelastung kann ebenfalls die Steifigkeit des Mattenelementes beeinflussen. Je größer die Zugbelastung desto geringer ist die Neigung zur Durchbiegung des Mattenelementes in seiner waagerechten Lage, insbesondere während der Bewegung in der Hubzone.

Erfindungsgemäß kann die Rippenstruktur derart zu den Mattengliedern ausgebildet sein, dass ein leerer Freiraum oder ein Freiraum ohne Lagerelement, der durch zwei Rippen begrenzt ist, einer Seitenwandung oder zwei benachbart zueinander gerichteten Seitenwandungen zugeordnet ist. Da im Bereich der Seitenwandung das Mattenelement mit seinen Mattengliedern sich bewegt, insbesondere dort der Abstand zwischen zwei benachbarten Mattengliedern sich vergrößert, ist es vorteilhaft, dort einen Freiraum innerhalb der Rippenstruktur vorzusehen, der unterhalb der oben genannten Seitenwandung des jeweiligen Mattenelementes liegt.

Zudem umfasst die erfindungsgemäße Vorrichtung, dass das Mattenelement zwei Seitenbereiche aufweist, wobei an jedem Seitenbereich zwei Riemenelemente befestigt sind, so dass am ersten Seitenbereich ein vorderes und ein hinteres Riemenelement und am zweiten Seitenbereich ein vorderes und ein hinteres Riemenelement befestigt sind, wobei die Riemenelemente jedes Seitenbereiches voneinander beabstandet sind, wobei der Antrieb ein unteres Umlenkrollenpaar in der Zuführebene und ein oberes Umlenkrollenpaar in der Abführebene aufweist, wobei die Umlenkrollenpaare als Getriebeelemente wirken, wobei eine erste Umlenkrolle des unteren Umlenkrollenpaares für die Umlenkung des vorderen und des hinteren Riemenelementes des ersten Seitenbereiches dient und eine zweite Umlenkrolle des unteren Umlenkrollenpaares für die Umlenkung des vorderen und des hinteren Riemenelementes des zweiten Seitenbereiches dient, wobei eine erste Umlenkrolle des oberen Umlenkrollenpaares für die Umlenkung des vorderen und des hinteren Riemenelementes des ersten Seitenbereiches dient und eine zweite Umlenkrolle des oberen Umlenkrollenpaares für die Umlenkung aller Riemenelemente dient, wobei der Antrieb Hilfsrollen als Getriebeelemente aufweist, an denen alle Riemenelemente umgelenkt werden, wobei insbesondere die Hilfsrollen zwischen der zweiten Umlenkrolle des oberen Umlenkrollenpaares und der ersten Rolle des unteren Rollenpaares angeordnet sind. Bei dieser Ausführungsform der Erfindung hat sich gezeigt, dass eine effiziente Bewegung eines oder mehrerer Mattenelemente durchführbar ist, ohne dass die Gefahr besteht, dass die zu transportierenden Stapel verrutschen, sich verschieben, welches auch unter den Begriff "Ausschuppen" fällt. Eine derartige Anordnung der genannten Riemen, Getriebeelemente etc. bewirkt, dass möglichst geringe Schwingungen, Impulse oder Kräfte auf jedes Mattenelement übertragen werden, wodurch die Transportgeschwindigkeit der Stapel wesentlich erhöht werden kann.

Erfindungsgemäß ist es denkbar, dass das Mattenelement mindestens ein Dämpfungselement aufweist, um auftretenden Schwingungen am Mattenelement entgegenzuwirken. Ein wesentlicher Vorteil des Dämpfungselementes ist, dass dieses derart auf das Mattenelement wirkt, dass mögliche auf das Mattenelement wirkende Kräfte und/oder Impulse nicht bewirken, dass das Mattenelement in Schwingungen gerät, die ein Ausschuppen der zu transportierenden Stapel auslösen. Das oder die Dämpfungselemente wirken vorteilhafterweise direkt auf das Mattenelement und eliminieren mögliche Schwingungen des Mattenelements. Vorteilhafterweise kontaktiert das Dämpfungselement das Mattenelement während die Stapel transportiert werden, wobei vorteilhafterweise das Dämpfungselement sowie das Mattenelement aus unterschiedlichen Werkstoffen ausgebildet sind. In einer möglichen Ausführungsform der Erfindung ist das Dämpfungselement aus einem Gleitwerkstoff ausgebildet. Die Ausführung des Dämpfungselementes aus einem Kunststoff kann ebenfalls von Vorteil sein, da insbesondere geringe Reibungskräfte und/oder Geräuschentwicklungen entstehen.

In einer die Erfindung verbessernden Maßnahme kann das Dämpfungselement in der Zuführebene und/oder in der Abführebene angeordnet sein. Es hat sich gezeigt, dass besonders in der Zuführebene das auch in der Abführebene Schwingungen und/oder Impulse auf das Mattenelement besonders häufig übertragen werden, die nachteiligerweise die gewünschte Stapelform des zu transportierenden Stapels verändern. Die umlaufenden Riemenelemente werden an definierten Orten durch die Getriebeelemente umgelenkt, wodurch radiale Kräfte, Schwingungen und/oder Impulse auf die Riemenelemente wirken, die wiederum nachteilig auf das an den Riemenelementen befestigte Mattenelement sich auswirken. Da insbesondere in der Zuführebene als auch in der Abführebene Richtungswechsel der umlaufenden Riemenelemente vorhanden sind, ist der Einsatz eines oder mehrerer Dämpfungselemente an diesen Stellen besonders sinnvoll.

Die Vorrichtung zum Höhentransport von Stapeln kann ferner umfassen, dass das Dämpfungselement am Gestell der Vorrichtung befestigt ist. Ein Vorteil dieser Ausführungsform ist, dass wirkungsvoll mögliche auf das Dämpfungselement wirkende Schwingungen und/oder Kräfte und/oder Impulse aufgenommen werden können, so dass ein ruhiger Transport der Stapel in der Transportzone sowie in der Hubzone entsteht. Vorteilhafterweise kann das Dämpfungselement vor der Hubzone und/oder nach der Hubzone am Mattenelement anliegen. Der Kontakt zwischen dem Dämpfungselement und dem Mattenelement begünstigt die Aufnahme von etwaigen Schwingungen und/oder Kräften und/oder Impulsen, die bei der Umlenkung des flexiblen Mattenelementes und/oder bei der Umlenkung der Riemenelemente entstehen.

Zudem kann die erfindungsgemäße Vorrichtung mehrere Dämpfungselemente aufweisen, die am Randbereich des Mattenelementes wirken. Das bedeutet, dass gleichzeitig an einem Mattenelement zwei oder mehrere Dämpfungselemente das Mattenelement kontaktieren.

Vorteilhafterweise kann das Dämpfungselement auf die Standfläche wirken, auf der der Stapel aufsetzbar ist. Hierbei ist es denkbar, dass der Stapel zwischen den wirkenden Dämpfungselementen auf der Standfläche sich befindet, wobei ein genügend großer Abstand zwischen dem Dämpfungselement und dem Stapel vorliegt.

Zudem kann vorgesehen sein, dass das Dämpfungselement verfahrbar am Gestell angeordnet ist, insbesondere dass ein Antrieb vorgesehen ist, um das Dämpfungselement an die Standfläche des Mattenelementes bis zum Kontakt heranzufahren. Somit ist es denkbar, dass die relative Position des Dämpfungselementes bezogen auf das Mattenelement einstellbar ist, um eine optimale Kontaktierung zwischen dem Dämpfungselement und dem Mattenelement zu erreichen, die bewirkt, dass wirkungsvoll Schwingen am Mattenelement reduziert bzw. eliminiert werden können. Beispielsweise kann die erfindungsgemäße Vorrichtung Sensorelemente aufweisen, die den Verfahrweg des Dämpfungselementes und/oder die Position des Mattenelementes sowie die der Standfläche erkennen. Die Sensorelemente können mit dem Antrieb oder mit einer entsprechenden Steuerung in Datenkommunikation stehen, so dass das Dämpfungselement optimal zum Mattenelement verfahren werden kann.

Des Weiteren offenbart die erfindungsgemäße Vorrichtung, dass das Dämpfungselement eine stabartige Leiste und/oder Schiene ist, die insbesondere starr und/oder unbeweglich zum Mattenelement angeordnet ist. Die Ausbildung des Dämpfungselementes als stabartige Leiste oder Schiene hat den Vorteil, dass eine relativ große Kontaktfläche seitens des Dämpfungselementes gebildet werden kann, die unmittelbar auf der Standfläche des Mattenelementes wirkt. Zudem können wirksam Schwingungen, Kräfte oder Impulse durch ein derartiges geometrisch geformtes Dämpfungselement aufgenommen werden.

Ebenfalls kann die erfindungsgemäße Vorrichtung vorsehen, dass das Dämpfungselement eine Rolle ist, die das Mattenelement kontaktiert und eine Achse aufweist, um die die Rolle während der Bewegung des Mattenelementes rotiert. Die Rolle rollt somit während der Bewegung des Mattenelementes an der Standfläche des Mattenelementes ab und kann wirkungsvoll Schwingungen, Kräfte oder Impulse, die auf das Mattenelement wirken können, aufnehmen, ohne dass eine Ausschuppung des auf dem Mattenelement sich befindenden Stapels entsteht. Wie auch die stabartige Leiste und/oder Schiene, die als Dämpfungselement dienen können, kann auch die Rolle mit einem Antrieb verbunden sein, der dafür sorgt, dass das Dämpfungselement verfahrbar am Gestellt angeordnet ist.

Ebenfalls kann die erfindungsgemäße Vorrichtung ein Dämpfungselement umfassen, das bezüglich der Breite des Mattenelementes einstellbar ist, wobei insbesondere die Einstellung in Abhängigkeit von Format des Stapels abhängt. Die Einstellung der Position des Dämpfungselementes erfolgt derart, dass ein genügend großer Abstand zwischen dem Stapel, der auf der Standfläche sich befindet und dem Dämpfungselement vorliegt.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung einer Vorrichtung zum Höhentransport von Stapeln,
- Figur 2: eine weitere erfindungsgemäße Vorrichtung zum Höhentransport von Stapeln,
- Figur 3: eine Detailansicht auf ein Mattenelement, welches in einer Vorrichtung zum Höhentransport zum Einsatz kommen kann,
- Figur 4: eine weitere Ansicht auf ein Mattenelement in einer alternativen Ausgestaltung zu Figur 3,
- Figur 5: eine schematische Darstellung einer möglichen Vorrichtung zum Höhentransport von Stapeln,
- Figur 6: eine vereinfachte Darstellung bezüglich eines Mattenelementes, an dem Riemenelemente zur Bewegung des Mattenelementes angeordnet sind,
- Figur 7: eine dreidimensionale Seitenansicht auf eine mögliche Ausgestaltung eines Mattenelementes und
- Figur 8: eine vereinfachte Darstellung auf ein Mattenelement, das sich in einem Umlenkbereich befindet.

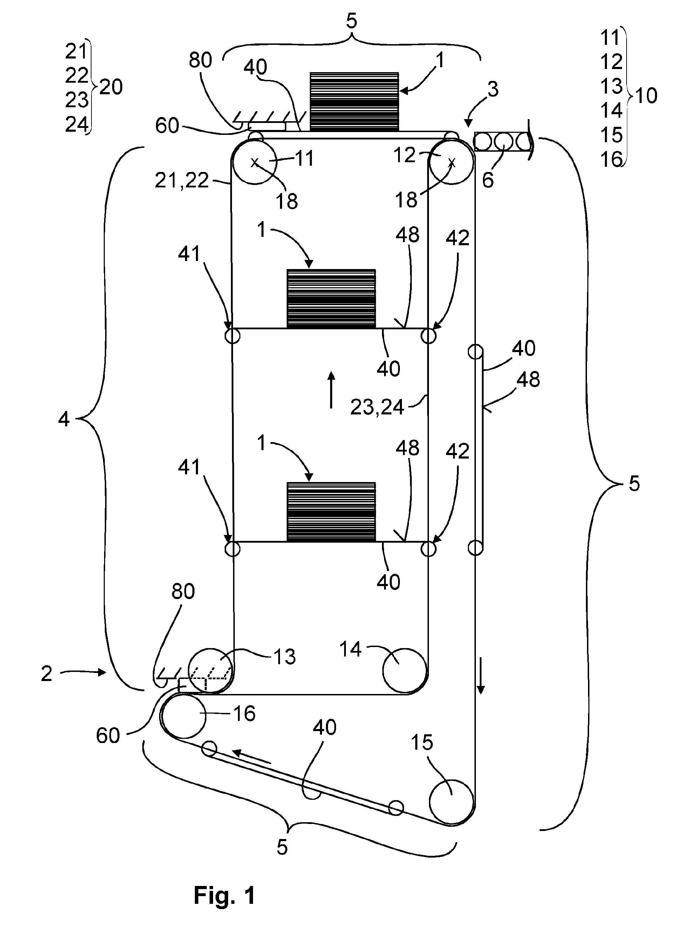

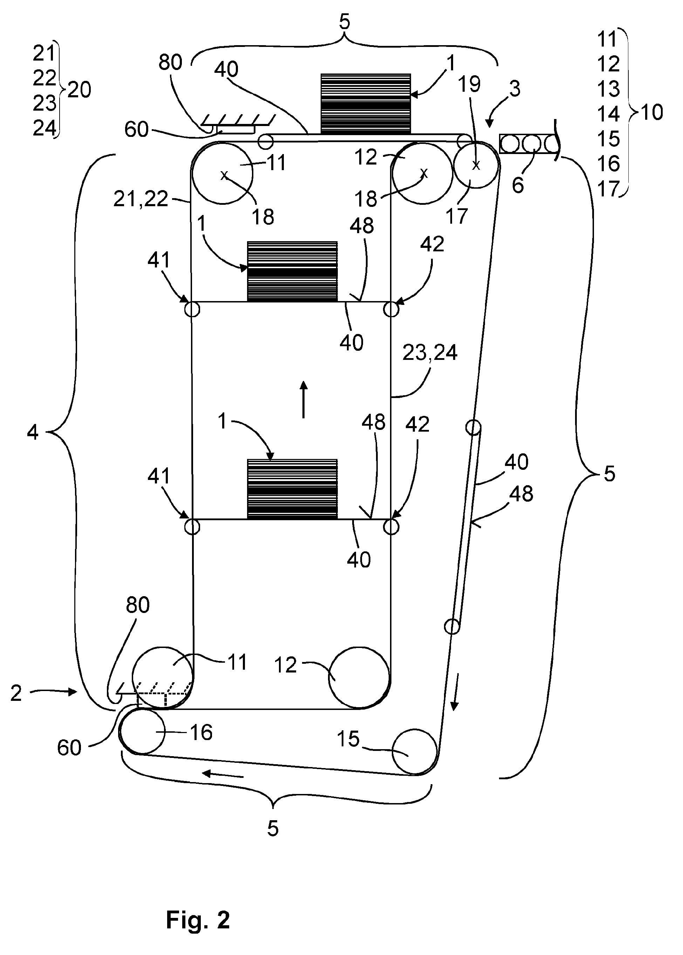

In Figur 1 und Figur 2 ist eine Vorrichtung zum Höhentransport, die auch als Höhenförderer bezeichnet wird, von Stapeln 1 dargestellt. Ein Stapel 1 setzt sich aus einer Vielzahl von übereinanderliegenden Stapelelementen zusammen. Die Stapelelemente können zum Beispiel flachliegende Säcke, Sackhalbzeuge oder Schlauchabschnitte sein, welche vor dem Höhenförderer hergestellt worden sind und von einer Produktionshöhe auf ein definiertes Höhenniveau mit Hilfe des Höhenförderers zu bringen sind. Wenn die Stapel 1 den Höhenförderer verlassen, kann zum Beispiel eine Palettierung der Stapel 1 in einem Palettierer erfolgt, welches explizit nicht dargestellt ist.

Die Vorrichtung weist eine Transportvorrichtung 20 auf, die mehrere, umlaufende Riemenelemente 21, 22, 23, 24 aufweist, an denen zumindest ein flexibles Mattenelement 40 angeordnet ist. In den Ausführungsbeispielen gemäß Figur 1 und Figur 2 sind mehrere Mattenelemente 40 vorgesehen, die über die Transportvorrichtung 20 in einer Hubzone 4 und in einer Transportzone 5 bewegt werden. Der Höhenförderer weist eine Zuführebene 2 auf, um eine Vielzahl an Stapeln 1 dem jeweiligen Mattenelement 40 zuzuführen, welches exemplarisch mittels einer Pfeildarstellung gezeigt ist. Die Transportvorrichtung 20 wird durch einen Antrieb 10 angetrieben, wobei der Antrieb 10 eine Vielzahl an Getriebeelementen 11, 12, 13, 14, 15, 16, 17 aufweist, die in Wirkverbindung mit den Riemenelementen 21, 22, 23, 24 stehen, um die Mattenelemente 40 von der Zuführebene 2 in eine Abführebene 3 und zurück zu bewegen. In der Abführebene 3 ist das gewünschte Höhenniveau für die einzelnen Stapel 1 erreicht, in der jeder Stapel 1 von dem jeweiligen Mattenelement 40 abgeführt wird und somit jeder Stapel 1 den Höhenförderer verlässt. Im Bereich der Abführebene 3 ist ein Rollensystem 6 dargestellt, das jeden Stapel 1 zu dem nächsten Bearbeitungsschritt, beispielsweise für eine Palettierung weiter befördert.

Die Getriebeelemente 11 - 16 sind derart angeordnet, dass die Hubzone 4 zwischen der Zuführebene 2 und der Abführebene 3 liegt. In der Hubzone 4 bietet das Mattenelement 40 eine Standfläche 48 für jeden Stapel 1. Die Standfläche 48 ist im Wesentlichen senkrecht zur Bewegungsrichtung des Mattenelementes 40 während des Transports in der Hubzone 4 ausgerichtet. In der Transportzone 5 ist die Standfläche 48 des Mattenelementes 40 parallel zur Bewegungsrichtung des Mattenelementes 40 ausgerichtet.

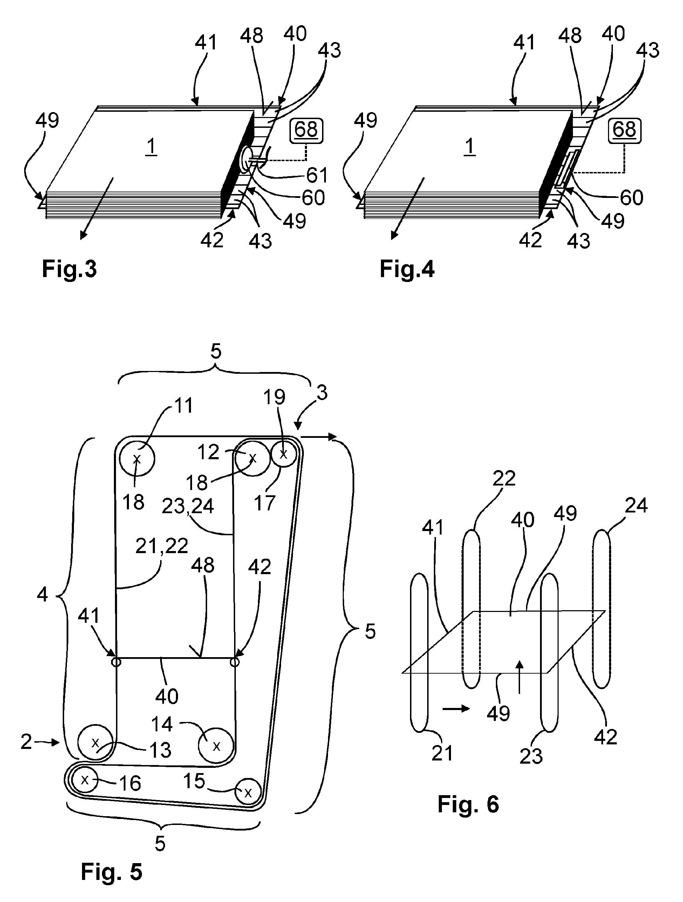

Jedes Mattenelement 40 weist zwei Seitenbereiche 41, 42 auf, die auch schematisch in Figur 6 gezeigt sind. Zudem zeigt Figur 6 die Bewegungsrichtung des Mattenelementes 40 in der Hubzone 4, in der sich das Mattenelement 40 von der Zuführebene 2 nach oben in Richtung Abführebene 3 bewegt (s. nach oben gerichteter Pfeil). Bevor das Mattenelement 40 in die Hubzone 4 gelangt, verfährt das Mattenelement 40 translatorisch nach rechts, welches in Figur 6 durch den nach rechts ausgerichteten Pfeil schematisch gezeigt ist. Das gleiche gilt, wenn das Mattenelement 40 die Abführebene 3 erreicht hat.

An jedem Seitenbereich 41, 42 sind jeweils zwei Riemenelemente 21 - 24 befestigt. Das bedeutet, dass gemäß Figur 6 am ersten Seitenbereich 41 ein vorderes Riemenelement 21 und ein hinteres Riemenelement 22 und am zweiten Seitenbereich 42 ein vorderes Riemenelement 23 und ein hinteres Riemenelement 24 befestigt sind. Die Riemenelemente 21 - 24 jedes Seitenbereiches 41, 42 sind jeweils beabstandet zueinander angeordnet.

Der Antrieb 10 gemäß Figur 1 und Figur 2 weist ein unteres Umlenkrollenpaar 13, 14 in der Zuführebene 2 und ein oberes Umlenkrollenpaar 11, 12 in der Abführebene 3 auf, wobei die Umlenkrollenpaare 11, 12, 13, 14, als Getriebeelemente wirken. In Figur 5 und Figur 6 ist vereinfacht die Anordnung der Riemenelemente 21 - 24 innerhalb des Höhenförderers gezeigt, wobei eine erste Umlenkrolle 13 des unteren Umlenkrollenpaares 13, 14 für die Umlenkung des vorderen 21 und des hinteren Riemenelementes 22 des ersten Seitenbereichs 41 dient und eine zweite Umlenkrolle 14 des unteren Umlenkrollenpaares 13, 14 für die Umlenkung des vorderen 23 und des hinteren Riemenelementes 24 des zweiten Seitenbereiches 42 dient. In der Transportzone 5 und zwar hinter der Abführebene 3 sind die Riemenelemente 21 - 24 durch den Antrieb 10 derart ausgerichtet, dass die Riemenelemente 21 - 24 hintereinander ausgerichtet sind, wobei die Standfläche 48 des Mattenelementes 40 parallel zur Bewegungsrichtung des Mattenelementes 40 positioniert ist.

Gemäß Figur 1 dient die erste Umlenkrolle 11 des oberen Umlenkrollenpaares 11, 12 für die Umlenkung des vorderen 21 und des hinteren Riemenelementes 22 des ersten Seitenbereichs 41 und die zweite Umlenkrolle 12 des oberen Umlenkrollenpaares 11, 12 dient für die Umlenkung aller Riemenelemente 21 - 24.

Gemäß Figur 2 kommen vergrößerte Umlenkrollen 11, 12, 13, 14 zum Einsatz, wobei der Antrieb 10 in der Abführebene 3 eine Übergaberolle 17 aufweist, die sich in der Bewegungsrichtung des Mattenelementes 10 dem oberen Rollenpaar 11, 12 anschließt. Das obere Rollenpaar 11, 12 weist einen wesentlich größeren Durchmesser auf, als die Übergaberolle 17. Gemäß Figur 2 dient die erste Umlenkrolle 11 des oberen Rollenpaares 11, 12 für die Umlenkung des vorderen 21 und hinteren Riemenelementes 22 des ersten Seitenbereiches 41. Die zweite Umlenkrolle 12 des oberen Rollenpaares 11, 12 dient der Umlenkung des vorderen 23 und des hinteren Riemenelementes 24, wobei gleichzeitig das vordere 21 und das hintere Riemenelement 22 des ersten Seitenbereiches 41 an der zweiten Umlenkrolle 12 des oberen Rollenpaares 11, 12 anliegt. Alle Riemenelemente 21 - 24 werden durch die Übergaberolle 17 umgelenkt. Die größeren Umlenkrollen 11 - 14 bewirken höhere Transportgeschwindigkeiten, wobei die Horizontalbeschleunigungen in den Umlenkpunkten wesentlich reduziert werden können. Die Übergaberolle 17, die in ihrem Durchmesser wesentlich verkleinert ist, ermöglicht eine saubere Übergabe der Stapel 1, welches insbesondere bei kleinsten Formaten bei den Stapelelementen bedeutsam ist.

Beispielsweise ist es gemäß der dargestellten Ausführungsbeispiele denkbar, dass ein Antriebsmotor im Antrieb 10 integriert ist, der zumindest eins der vielen Getriebeelemente direkt antreibt. Zum Beispiel kann vorteilhaft sein, dass der Antriebsmotor das Getriebeelement 12, insbesondere die zweite Umlenkrolle 12 antreibt, wodurch sämtliche Riemenelemente 21 - 24 in eine Umlaufbewegung setzbar sind, so dass die an den Riemenelementen 21 - 24 befestigten Mattenelemente 40 mitbewegt werden.

Wie in Figur 1 und Figur 2 gezeigt ist, weist die erfindungsgemäße Vorrichtung zum Höhentransport von Stapeln 1 am Mattenelement 40 ein Dämpfungselement 60 auf, wobei das Dämpfungselement 60 in der Zuführebene 2 und/oder in der Abführebene 3 angeordnet sein kann. In vorliegendem Ausführungsbeispiel ist das Dämpfungselement 60 am Gestell 80 des Höhenförderers befestigt. Ein wesentlicher Vorteil des Dämpfungselementes 60 ist, dass dieses derart auf das Mattenelement 40 wirkt, dass mögliche auf das Mattenelement 40 wirkende Kräfte und/oder Impulse und/oder Schwingungen nicht bewirken, dass das Mattenelement 40 sich derart bewegt, dass der zu transportierende Stapel sich verschiebt oder ausschuppt. Gemäß Figur 1 und Figur 2 befindet sich das Dämpfungselement 60 vor der Hubzone 4 und nach der Hubzone 4 am Mattenelement 40.

Gemäß Figur 3 kann das Dämpfungselement 60 eine Rolle sein, die das Mattenelement 40 auf der Standfläche 48 kontaktiert, wobei die Rolle eine Achse 61 aufweist, um die die Rolle 60 während der Bewegung des Mattenelementes 40 rotiert. Alternativ ist es denkbar, dass das Dämpfungselement 60 gemäß Figur 4 eine stabartige Leiste ist, die starr auf dem Mattenelement 40 aufliegt. Gemäß Figur 3 und Figur 4 ist gezeigt, dass das Dämpfungselement 60 am Randbereich 49 auf der Standfläche 48 wirkt. Zudem ist gezeigt, dass das Dämpfungselement 60 verfahrbar am Gestell 80 angeordnet sein kann, wobei ein Antrieb 68 vorgesehen sein kann, um das Dämpfungselement 60 an die Standfläche 48 des Mattenelementes 40 bis zum Kontakt heranzufahren. Die Dämpfungselemente 60 gemäß Figur 3 und Figur 4 sind beabstandet zum Stapel 1 angeordnet. Da in den Umlenkbereichen der Hilfsrolle 16 sowie der ersten Umlenkrolle 11 es sich gezeigt hat, dass Schwingungen am Mattenelement 40 entstehen, welches nachteiligerweise mit einem Ausschuppen des Stapels 1 verbunden wäre, erfolgt eine Positionierung der Dämpfungselemente 60 an den Stellen des Höhenförderers, die in Figur 1 und Figur 2 dargestellt sind.

In Figur 1 und Figur 2 weist der Antrieb 10 Hilfsrollen 15, 16 als Getriebeelemente auf, an denen alle Riemenelemente 21 - 24 umgelenkt werden, wobei die Hilfsrollen 15, 16 zwischen der zweiten Umlenkrolle 12 des oberen Umlenkrollenpaares 11, 12 und der ersten Umlenkrolle 13 des unteren Rollenpaares 13, 14 angeordnet sind. Gemäß Figur 2 befindet sich hinter der zweiten Umlenkrolle 12 des oberen Umlenkrollenpaares 11, 12 noch die Übergaberolle 17, an die sich die Hilfsrollen 15, 16 anschließen. Die erste 11 und die zweite Umlenkrolle 12 des oberen Rollenpaares 11, 12 sowie die sich anschließende Übergaberolle 17 weisen jeweils eine Achse 18, 19 auf, um die die erste 11, die zweite Umlenkrolle 12 sowie die Übergaberolle 17 drehbar gelagert sind. Die Achsen 18 der Umlenkrollen 11, 12 liegen gemeinsam auf einer horizontalen Ebene, wobei die Achse 19 der Übergaberolle 17 oberhalb der soeben genannten horizontalen Ebene liegt, so dass sich eine waagerechte Abführebene ergibt.

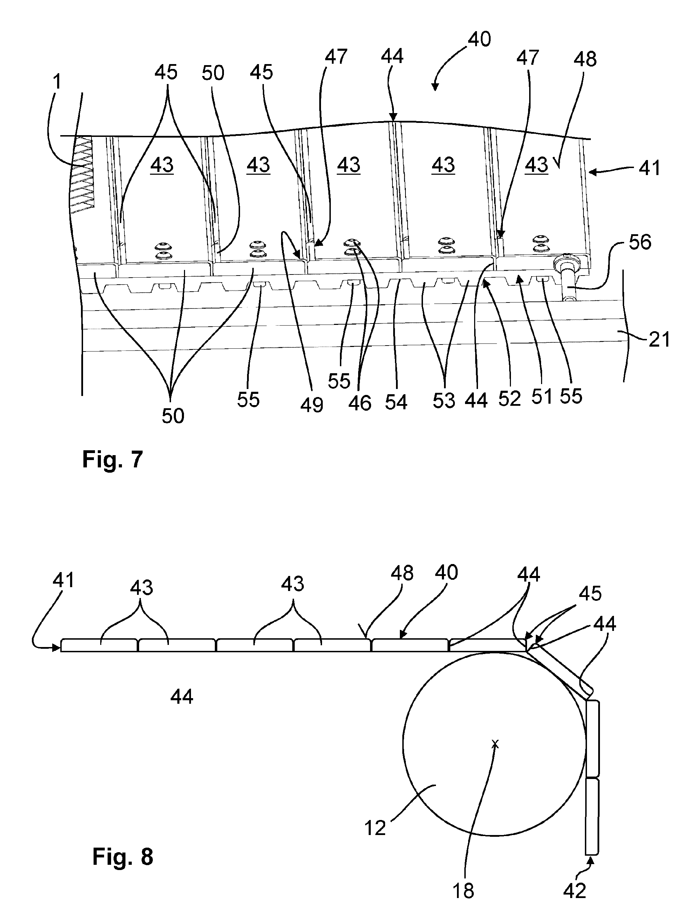

Um die Gefahr der Ausschuppung während des Transports innerhalb des Höhenförderers zu reduzieren, bzw. höhere Transportgeschwindigkeiten zu erreichen, ist das Mattenelement 40 mit einer Vielzahl an steifen Mattengliedern 43 ausgeführt, welches in Figur 7 und Figur 8 gezeigt ist. Die Mattenglieder 43 sind derart benachbart zueinander angeordnet, dass bei der Umlenkung der Bewegungsrichtung des Mattenelementes 40 jedes Mattenglied 43 zum benachbarten Mattenglied 43 relativ bewegbar ist. Gemäß Figur 7 und Figur 8 weisen die Mattenglieder 43 sowohl in der Hubzone 4 als auch in der Transportzone 5 einen Abstand zueinander auf. Hierbei sind die Mattenglieder 43 aus Metall ausgebildet, im vorliegenden Ausführungsbeispiel aus Aluminium. Jedes Mattenglied 43 weist ein Hohlprofil auf, wobei ausgehend von der Standfläche 48 eines jeden Mattengliedes 43 zum benachbarten Mattenglied 43 jeweils eine Seitenwandung 44 sich anschließt. Die Seitenwandungen 44 sind zueinander im Wesentlichen parallel angeordnet. Zudem ist jede Seitenwandung 44 im Wesentlichen senkrecht zur Standfläche 48 des Mattengliedes 43 ausgerichtet. Im dargestellten Ausführungsbeispiel gemäß Figur 7 und Figur 8 ist das Mattenglied 43 als U-Profil ausgebildet, wobei zwischen der Seitenwandung 44 und der Standfläche 48 das Mattenglied 43 eine Abrundung 45 aufweist. In Figur 8 ist gezeigt, dass während der Umlenkung im Bereich der zweiten Umlenkrolle 12 der Abstand zwischen zwei benachbarten Mattengliedern 43 im Bereich der Abrundung 45 sich vergrößert.

Gemäß Figur 6 und Figur 7 weist jedes Mattenelement 40 zwei Randbereiche 49 auf, die parallel zur Bewegungsrichtung des Mattenelementes 40 zueinander ausgerichtet sind, wobei an den Randbereichen 49 die Riemenelemente 21 - 24 befestigt sind, worauf im Folgenden noch eingegangen wird. Die Befestigungspunkte befinden sich gleichzeitig im Bereich der Seitenbereiche 41, 42 des Mattenelementes 40.

Das Mattenelement 40 weist an jedem seiner beiden Randbereiche 49 ein Stabilisierungsmittel 50 auf, das in der Hubzone 4 eine horizontale Erstreckung der Standfläche 48 begünstigt. Gemäß Figur 7 befindet sich das Stabilisierungsmittel 50 innerhalb des Hohlprofils des Mattengliedes 43 und ist somit der Form des Hohlprofils angepasst. Eine der beiden Seitenwandungen 44 des jeweiligen Mattengliedes 43 weist eine Aussparung 47 auf, durch die das Stabilisierungsmittel 50 sich zumindest teilweise erstreckt und am benachbarten Mattenglied 43 an dessen Seitenwandung 44 anliegt. Zudem weist jedes Mattenelement 40 ein Biegemittel 51 auf, wodurch die Biegefähigkeit des Mattenelementes 40 begünstigt wird. Somit sind die Stabilisierungsmittel 50 sowie das Biegemittel 51 am Randbereich 49 des Mattengliedes 40 vorgesehen. Das Biegemittel 51 weist gemäß Figur 7 eine Rippenstruktur 52 auf, die vorsprungartige Rippen 53 hat, die quer zur Bewegungsrichtung des Mattenelementes 40 ausgerichtet sind. Zwischen den Rippen 53 befinden sich mehrere Freiräume 54, in dem ein Lagerelement 55 eingelegt ist. Das Lagerelement 55 wirkt als Mutter, um eine zuverlässige Befestigung mit dem Befestigungsmittel 46 zu erreichen, das das Stabilisierungsmittel 50 am Mattenglied 53 sowie am Biegemittel 51 hält. Im vorliegenden Ausführungsbeispiel weist jedes Mattenglied 53 zwei benachbart zueinander angeordnete Befestigungsmittel 46 auf. Über das Befestigungsmittel 46 ist gleichzeitig die Steifigkeit des Mattenelementes 40 einstellbar. Die Rippenstruktur 52 des Biegemittels 51 begünstigt die Biegefähigkeit des Mattenelementes 40.

Gemäß Figur 7 ist gezeigt, dass der Randbereich 49 des Mattenelementes 40 über ein Befestigungselement 56 mit sämtlichen Riemenelementen 21 bis 24 befestigt ist. Gemäß Figur 7 ist exemplarisch lediglich gezeigt, dass das Riemenelement 21 mit dem Randbereich 49 des Mattenelementes 40 über das Befestigungselement 56 befestigt ist. Gemäß des dargestellten Ausführungsbeispiels verbindet das Befestigungselement 56 das Stabilisierungsmittel 50 mit dem dazugehörigen Riemenelement 21. Vorteilhafterweise ist das Lagerelement 55 innerhalb des Freiraums 54 der Rippenstruktur 52 eingelassen, so dass es zu keiner Kollision mit anderen Gegenständen innerhalb des Höhenförderers kommen kann.

Um hohe Transportgeschwindigkeiten in den Höhenförderer gemäß Figur 1 und Figur 2 zu erreichen und/oder während des Transports der Stapel 1 keine Ausschuppung entstehen zu lassen, ist es denkbar, die in Figur 3 und Figur 4 gezeigten Dämpfungselemente 60 zusätzlich zu dem Ausführungsbeispiel gemäß Figur 7 und Figur 8 einzusetzen. Das bedeutet, dass Figur 1 und Figur 2 auch dämpfungslos mit dem Ausführungsbeispiel gemäß Figur 7 und Figur 8 kombinierbar ist. Bezüglich der soeben genannten Ziele ist es denkbar, anstelle der Getriebeelemente 11, 12, 13, 14 gemäß Figur 1 vergrößerte Umlenkrollen 11, 12, 13, 14 sowie die Übergaberolle 17 einzusetzen.

### Bezuaszeichenliste

- 1: Stapel
- 2: Zuführebene
- 3: Abführebene
- 4: Hubzone
- 5: Transportzone
- 6: Rollensystem

- 10: Antrieb
- 11: Getriebeelement, erste Umlenkrolle
- 12: Getriebeelement, zweite Umlenkrolle
- 13: Getriebeelement, erste Umlenkrolle
- 14: Getriebeelement, zweite Umlenkrolle
- 15: Hilfsrolle
- 16: Hilfsrolle
- 17: Übergaberolle
- 18: Achse (von 11, 12)
- 19: Achse (von 17)

- 20: Transportvorrichtung
- 21: Riemenelement, vorderes Riemenelement
- 22: Riemenelement, hinteres Riemenelement
- 23: Riemenelement, vorderes Riemenelement
- 24: Riemenelement, hinteres Riemenelement

- 40: Mattenelement
- 41: erster Seitenbereich
- 42: zweiter Seitenbereich
- 43: Mattenglied
- 44: Seitenwandung
- 45: Abrundung
- 46: Befestigungsmittel
- 47: Aussparung
- 48: Standfläche
- 49: Randbereich

- 50: Stabilisierungsmittel
- 51: Mittel, Biegemittel
- 52: Rippenstruktur
- 53: Rippen
- 54: Freiraum
- 55: Lagerelement
- 56: Befestigungselement

- 60: Dämpfungselement
- 61: Achse
- 68: Antrieb für 60

- 80: Gestell

## Patentansprüche

1. Vorrichtung zum Höhentransport von Stapeln (1), insbesondere Säcken, Sackhalbzeugen, Schlauchabschnitten oder flachliegenden Säcken, welche folgende Merkmale umfasst:
eine Transportvorrichtung (20), die mehrere, umlaufende Riemenelemente (21,22,23,24) aufweist, an denen zumindest ein flexibles Mattenelement (40) angeordnet ist,
eine Zuführebene (2), um Stapel (1) dem Mattenelement (40) zuzuführen,
eine Abführebene (3), um Stapel (1) von dem Mattenelement (40) abzuführen,
ein Antrieb (10), der eine Vielzahl an Getriebeelementen (11,12,13,14,15,16) aufweist,
die in Wirkverbindung mit den Riemenelementen (21,22,23,24) stehen, um das Mattenelement (40) von der Zuführebene (2) in die Abführebene (3) und zurück zu bewegen, wobei die Getriebeelemente (11,12,13,14,15,16) derart angeordnet sind, dass sich eine Hubzone (4) und eine Transportzone (5) bilden,
wobei die Hubzone (4) zwischen der Zuführebene (2) und der Abführebene (3) liegt,
wobei in der Hubzone (4) das Mattenelement (40) eine Standfläche (48) für den Stapel (1) bietet, die im wesentlichen senkrecht zur Bewegungsrichtung des Mattenelementes (40) ist, und
in der Transportzone (5) die Standfläche (48) des Mattenelementes (40) parallel zur Bewegungsrichtung des Mattenelementes (40) ist und mindestens eine Umlenkung der Bewegungsrichtung des Mattenelementes (40) erfolgt, wobei
das Mattenelement (40) aus einer Vielzahl an steifen Mattengliedern (43) ausgeführt ist,
die derart benachbart zueinander angeordnet sind, dass bei der Umlenkung der Bewegungsrichtung des Mattenelementes (40) jedes Mattenglied (43) zum benachbarten Mattenglied (43) relativ bewegbar ist.

2. Vorrichtung nach Anspruch 1,
**dadurch gekennzeichnet,**
**dass** die Mattenglieder (43) derart im Mattenelement (40) angeordnet sind, dass in der Hubzone (4) die Mattenglieder (43) einen Abstand zueinander aufweisen, insbesondere dass der Abstand zwischen 0.3mm ≤ Abstand ≤ 5mm, insbesondere zwischen 1mm ≤ Abstand ≤ 3mm liegt und/oder dass das Mattenglied (43) als U-Profil ausgebildet ist.

3. Vorrichtung nach einem der vorhergehenden Ansprüchen,
**dadurch gekennzeichnet,**
**dass** das Mattenelement (40) aus Metall ausgebildet ist, insbesondere aus Aluminium ausgeführt ist.

4. Vorrichtung nach einem der vorhergehenden Ansprüchen,
**dadurch gekennzeichnet,**
**dass** das Mattenglied (43) ein Hohlprofil aufweist, wobei insbesondere ausgehend von der Standfläche (48) eines Mattengliedes (43) zum benachbarten Mattenglied (43) jeweils eine Seitenwandung (44) sich anschließt, wobei die Seitenwandungen (44) zueinander im wesentlichen parallel angeordnet sind, wobei insbesondere das Mattenglied (43) ein Biegeteil ist, insbesondere ein Stanzbiegeteil ist und/oder die Seitenwandung (44) im wesentlichen senkrecht zur Standfläche (48) des Mattengliedes (43) ausgerichtet ist.

5. Vorrichtung nach einem der vorhergehenden Ansprüchen,
**dadurch gekennzeichnet,**
**dass** zwischen der Seitenwandung (44) und der Standfläche (48) das Mattenglied (43) eine Abrundung (45) aufweist.

6. Vorrichtung nach einem der vorhergehenden Ansprüchen,
**dadurch gekennzeichnet,**
**dass** während der Umlenkung der Abstand zwischen zwei benachbarten Mattengliedern (43) im Bereich der Abrundung (45) sich vergrößert.

7. Vorrichtung nach einem der vorhergehenden Ansprüchen,
**dadurch gekennzeichnet,**
**dass** das Mattenelement (40) mindestens ein Stabilisierungsmittel (50) aufweist, das in der Hubzone (4) eine horizontale Erstreckung der Standfläche (48) begünstigt, insbesondere dass ein Randbereich (49) des Mattengliedes (43) das Stabilisierungsmittel (50) aufweist und/oder dass das Stabilisierungsmittel (50) quaderförmig oder würfelförmig ausgeführt ist.

8. Vorrichtung nach einem der vorhergehenden Ansprüchen,
**dadurch gekennzeichnet,**
**dass** das Mattenelement (40) Mittel (51) zur Begünstigung der Biegefähigkeit des Mattenelementes (40) aufweist, wobei insbesondere das Mittel (51) an der der Standfläche (48) abgewandten Seite des Mattenelementes (40) angeordnet ist und/oder dass der Randbereich (49) des Mattengliedes (43) das Mittel zur Begünstigung der Biegefähigkeit des Mattenelementes (40) aufweist, insbesondere dass das Mittel (51) aus einem flexiblen Kunststoff ausgebildet sind und/oder das Mittel (51) an den Mattengliedern (43) befestigt ist.

9. Vorrichtung nach einem der vorhergehenden Ansprüchen,
**dadurch gekennzeichnet,**
**dass** das Mattenelement (40) zwei Randbereiche (49) aufweist, die parallel zur Bewegungsrichtung des Mattenelementes zueinander ausgerichtet sind, wobei insbesondere an den Randbereichen (49) die Riemenelemente (21,22,23,24) befestigt sind.

10. Vorrichtung nach einem der vorhergehenden Ansprüchen,
**dadurch gekennzeichnet,**
**dass** die Stabilisierungsmittel (50) an den Randbereichen (49) des Mattenelementes (40) angeordnet sind, so dass einer Durchbiegung des Mattenelementes (40) in der Hubzone (4) entgegengewirkt wird, und/oder dass die Stabilisierungsmittel (50) der Form des Hohlprofils angepasst ist.

11. Vorrichtung nach einem der vorhergehenden Ansprüchen,
**dadurch gekennzeichnet,**
**dass** das Stabilisierungsmittel (50) über mindestens ein Befestigungsmittel (46) am Mattenglied (43) und/oder am Mittel (51) zur Begünstigung der Biegefähigkeit des Mattenelementes (40) befestigt ist, wobei insbesondere über das Befestigungsmittel (46) die Steifigkeit des Mattenelementes (40) einstellbar ist.

12. Vorrichtung nach einem der vorhergehenden Ansprüchen,
**dadurch gekennzeichnet,**
**dass** eine der Seitenwandungen (44) des Mattengliedes (43) eine Aussparung (47) aufweist, durch die das Stabilisierungsmittel (50) sich erstreckt und am benachbarten Mattenglied (43) anliegt.

13. Vorrichtung nach einem der vorhergehenden Ansprüchen,
**dadurch gekennzeichnet,**
**dass** das Mittel (51) zur Begünstigung der Biegefähigkeit des Mattenelementes (40) eine Rippenstruktur (52) aufweist, wobei die Rippenstruktur (52) vorsprungartige Rippen (53) aufweist, die quer zur Bewegungsrichtung des Mattenelementes (40) ausgerichtet sind, insbesondere dass zwischen den Rippen (53) mehrere Freiräume (54) sich befinden, wobei in dem Freiraum (54), der mittig zum zugehörigen Mattenglied (43) positioniert ist, das Befestigungsmittel (46) wirkt, insbesondere dass in diesem Freiraum (54) ein Lagerelement (55) eingelegt ist, das mit dem Befestigungsmittel (56), das durch das Mattenglied (43) und durch das Stabilisierungsmittel (50) ragt, verbunden ist.

14. Vorrichtung nach einem der vorhergehenden Ansprüchen,
**dadurch gekennzeichnet,**
**dass** das Mattenelement (40) an beiden Randbereichen (49) über Befestigungselemente (56) mit den Riemenelementen (21,22,23,24) verbunden ist, insbesondere dass das Befestigungselement (56) das Stabilisierungsmittel (50) eines Mattengliedes (43) mit dem dazugehörigen Riemenelement (21,22,23,24) verbindet.

15. Vorrichtung nach einem der vorhergehenden Ansprüchen,
**dadurch gekennzeichnet,**
**dass** eine definierte Zugbelastung auf das Mittel (51) zur Begünstigung der Biegefähigkeit des Mattenelementes (40) wirkt.

16. Vorrichtung nach einem der vorhergehenden Ansprüchen,
**dadurch gekennzeichnet,**
**dass** die Rippenstruktur (52) derart zu den Mattengliedern (43) ausgebildet ist, dass ein leerer Freiraum (54) oder ein Freiraum (54) ohne Lagerelement (55), der durch zwei Rippen (53) begrenzt ist, einer Seitenwandung (44) oder zwei benachbart zueinander gerichteten Seitenwandungen (44) zugeordnet ist.

17. Vorrichtung nach einem der vorhergehenden Ansprüchen,
**dadurch gekennzeichnet,**
**dass** das Mattenelement (40) zwei Seitenbereiche (41,42) aufweist, wobei an jedem Seitenbereich (41,42) zwei Riemenelemente (21,22,23,24) befestigt sind, so dass am ersten Seitenbereich (41) ein vorderes (21) und ein hinteres Riemenelement (22) und am zweiten Seitenbereich (42) ein vorderes (23) und ein hinteres Riemenelement (24) befestigt sind, wobei die Riemenelemente (21,22,23,24) jedes Seitenbereiches (41,42) voneinander beabstandet sind, wobei
der Antrieb (10) ein unteres Umlenkrollenpaar (13,14) in der Zuführebene (2) und ein oberes Umlenkrollenpaar (11,12) in der Abführebene (3) aufweist, wobei die Umlenkrollenpaare (11,12,13,14) als Getriebeelemente wirken, wobei eine erste Umlenkrolle (13) des unteren Umlenkrollenpaares (13,14) für die Umlenkung des vorderen (21) und des hinteren Riemenelementes (22) des ersten Seitenbereiches (41) dient und eine zweite Umlenkrolle (14) des unteren Umlenkrollenpaares (13,14) für die Umlenkung des vorderen (23) und des hinteren Riemenelementes (24) des zweiten Seitenbereiches (42) dient, wobei
eine erste Umlenkrolle (11) des oberen Umlenkrollenpaares (11,12) für die Umlenkung des vorderen (21) und des hinteren Riemenelementes (22) des ersten Seitenbereiches (41) dient und eine zweite Umlenkrolle (12) des oberen Umlenkrollenpaares (11,12) für die Umlenkung aller Riemenelemente (21,22,23,24) dient, wobei der Antrieb (10) Hilfsrollen (15,16) als Getriebeelemente aufweist, an denen alle Riemenelemente (21,22,23,24) umgelenkt werden, wobei insbesondere die Hilfsrollen (15,16) zwischen der zweiten Umlenkrolle (12) des oberen Umlenkrollenpaares (11,12) und der ersten Umlenkrolle (13) des unteren Rollenpaares (13,14) angeordnet sind.
